# EUROPEAN PATENT APPLICATION

(11) **EP 1 942 396 A1**
(43) Date of publication of application: **09.07.2008**
(21) Application number: 08000058.1
(22) Date of filing: 03.01.2008
(51) Int. Cl.: G06F 1/32, G06F 3/033

(54) **Method of controlling touch pad in mobile communication terminal and mobile communication terminal thereof**

(30) Priority: 04.01.2007 KR 20070000994
(71) Applicant: LG Electronics Inc., Seoul 150-010 (KR)
(72) Inventor: Lee, Min Hak, Seoul 153-801 (KR); Kim, Ju Nam, Seoul 153-801 (KR)
(74) Representative: Katérle, Axel

(57) **Abstract**

A method of controlling a mobile communication terminal comprising a touch pad, a corresponding touch pad light and a display device. The method is characterized in that it comprises independently controlling an active state or an inactive state of the touch pad, an ON state or an OFF state of the touch pad light and at least an ON state or an OFF state of the display device.

## Description

### BACKGROUND OF THE INVENTION

### Field of the Invention

The present invention relates to a method and corresponding mobile communication terminal for independently controlling a touch pad, a touch pad light and a display device on the mobile terminal.

### Description of the Related Art

Mobile communication terminals now include many additional functions besides the basic call function. For example, users can now access the Internet, send voice and text messages, perform scheduling tasks, play games, listen to music, etc. on their mobile terminals. To provide these enhanced functions, the mobile terminals now include input devices such as a touch pad, a jog dial, a joystick, and a keypad including numbers and keys.

Further, the related art sliding-type mobile communication terminal including a touch pad activates and deactivates the touch pad together with the display device of the terminal. That is, the touch pad and the display device are operated in a linked manner with each other. In more detail, when the display device is ON, the touch pad light is ON, and the touch pad is in an active state and when there is no input operation performed on the terminal, the display device is changed into a dim state (because there has been no input). Further, the touch pad light remains in an ON state and the touch pad remains in an active state.

Then, when the display device is turned off from the dim state, the touch pad light is turned OFF, and at the same time, the touch pad is deactivated. The activation of the touch pad is also linked to an ON/OFF state of the touch pad light.

Therefore, because the touch pad light and the touch pad are operated in a linked manner, the touch pad cannot be used when the touch pad light is turned off. This is inconvenient for the user of the terminal.

Further, when the display device is turned ON or is in a dim state, the touch pad is in an active state and the touch pad light is in an ON state. Thus, the terminal uses more battery consumption than necessary. Further, when the touch pad light is in an OFF state, the touch pad light can only be turned ON by pressing a predetermined key. However, this action does not turn on the touch pad.

### SUMMARY OF THE INVENTION

Accordingly, one object of the present invention is to address the above-noted and other problems.

One object of the invention method of controlling a mobile communication terminal comprising a touch pad, a corresponding touch pad light and a display device, comprising independently controlling an active state or an inactive state of the touch pad, an ON state or an OFF state of the touch pad light and at least an ON state or an OFF state of the display device. The present invention also provides a corresponding mobile communication terminal.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:
FIG. 1 is a block diagram illustrating a mobile communication terminal according to an embodiment of the present invention.
FIG. 2 is a flowchart illustrating a method of controlling a touch pad in a mobile communication terminal according to an embodiment of the present invention.
FIG. 3 is a flowchart illustrating a method of controlling a touch pad in a mobile communication terminal according to another embodiment of the present invention.
FIG. 4 is a block diagram illustrating a mobile communication terminal according to another embodiment of the present invention.
FIG. 5 is a flowchart illustrating a method of controlling a touch pad in a mobile communication terminal operating in a DMB broadcasting environment according to an embodiment of the present invention.

### DETAILED DESCRIPTION OF THE INVENTION

Reference will now be made in detail to the preferred embodiments of the present invention, examples of which are illustrated in the accompanying drawings.

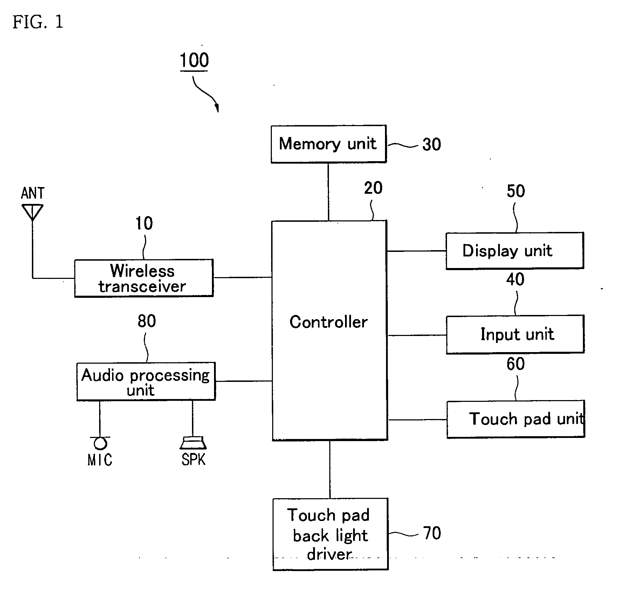

FIG. 1 is a block diagram illustrating a mobile communication terminal 100 according to an embodiment of the present invention. As shown, the mobile communication terminal 100 includes a wireless transceiver 10, a controller 20, a memory unit 30, an input unit 40, a display unit 50, a touch pad unit 60, a touch pad back light driver 70 and an audio processing unit 80.

The wireless transceiver 10 performs a communication function of the mobile communication terminal 100. Further, the controller 20 controls the overall operations of the mobile communication terminal 100. For example, the controller 20 controls the on/off state of the display unit 50, the active or inactive state of the touch pad unit 60, and the on/off state of a light of the touch pad unit 60.

In addition, the memory unit 30 includes a program memory and a data memory. The program memory stores programs for controlling the operations of the mobile communication terminal 100, and the data memory stores user-data and other data used in operating the mobile terminal.

Further, the input unit 40 includes buttons or keys that the user selects to input numerals and character information. The input unit 40 also includes function buttons that the user can select to perform specific functions. The input unit 40 includes a key pad, a jog dial, a touch screen, a joy stick, etc.

In addition, the display unit 50 displays information and menu screens used in operating the mobile terminal 100. The display unit 50 includes, for example, a liquid crystal display (LCD) or an organic light emitting diode (OLED).

Further, the display unit 50 may include two or more display devices including an external display unit and an internal display unit.

In addition, the touch pad unit 60 includes at least one touch pad that is used as an input device to receive input from a user. That is, the user can touch the touch pad to input or select desired characters or functions. Also, the touch pad back light driver 70 turns on/off a light of the touch pad unit 60 by controlling a power supply to a back light of the touch pad unit 60. The touch pad back light driver 70 also controls the touch pad unit 60 to turn on or off the entire light of the touch pad unit 60 or only specific portions of the touch pad unit 60.

In addition, the audio processing unit 80 outputs an audio signal that is decoded in the controller 20 through a speaker (SPK) or outputs an audio signal generated from a microphone (MIC) to the controller 20.

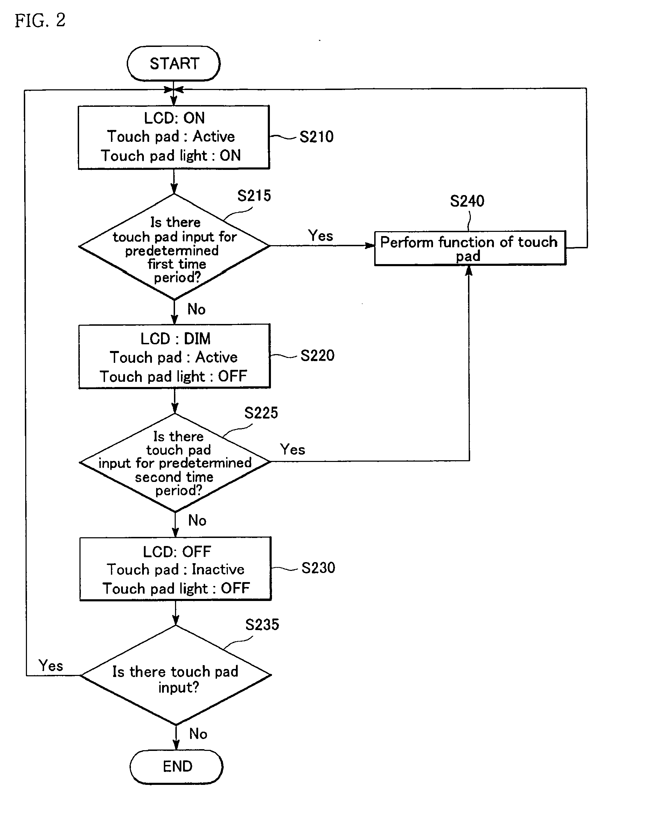

Next, FIG. 2 is a flowchart illustrating a method of controlling a touch pad in a mobile communication terminal according to an embodiment of the present invention. FIG. 1 will also be referred to in this description. As shown in FIG. 2, the LCD of the display unit 50 is turned ON, the light of the touch pad unit 60 is turned ON and the touch pad included in the touch pad unit 60 is in an active state (S210). The active state of the touch pad means that the user can select or active a function on the touch pad by touching the appropriate portion of the touch pad.

The controller 20 then determines if the user has touched the touch pad within a first predetermined time period (S215), and when the controller 20 determines the user has touched the touch pad (e.g., to input information (Yes in S215), the controller 20 performs the function corresponding the touched touch pad (S240).

Further, when the controller 20 determines the user has not touched the touch pad within the first predetermined time period (No in S215), the controller 20 reduces the brightness of the display unit 50 to a dim state (hereinafter, referred to as the 'dim state'), and controls the touch pad back light driver 70 to turn OFF the light of the touch pad unit 60 (S220). Note that the touch pad is still in the active state.

The controller 20 then determines if the user has touched the touch pad within a second predetermined time period (S225). When the user has not touched the touch pad (No in S225), the controller 20 turns OFF the display unit 50 and makes the touch pad unit 60 inactive (S230). That is, the controller 20 turns off the LCD included in the display unit 50. When the controller 20 determines the user has touched the touch pad within the second predetermined time period (Yes in S230), the controller 20 performs the function corresponding the touched touch pad (S240).

In addition, after step S230, the controller 20 again determines if the user has touched the touch pad (S235), and if so (Yes in S235), the method starts back at step S210. Thus, when the light of the touch pad unit 60 is in an OFF state in steps S220 and S230, and when the touch pad 60 is touched by the user in steps S225 or S235, the controller 20 controls the touch pad back light driver 70 to turn ON the light of the touch pad unit 60.

Also, when the touch pad included in the touch pad unit 60 is touched by the user, the function corresponding to the touched position of the touch pad is performed only when the touch pad is in an active state. In more detail, when the touch pad is touched by the user within the predetermined second time period (Yes in S225), the touch pad is in an active state so that the specific function of the touch pad is performed (S240), and at the same time, the light of the touch pad unit 60 and the display unit 50 is turned ON (S210).

On the other hand, when the touch pad is in an inactive state in step S230, and when the touch pad is touched by the user (Yes in S235), the function of the touch pad 60 is not performed and the touch pad 60 changes from the inactive state to the active state, and the light of the touch pad unit 60 and the display unit 50 is turned ON (S210).

That is, when the user touches the touch pad 60 in the inactive state, the function of the touch pad 60 is not performed and the touch pad 60 is changed from the inactive state to the active state. Accordingly, when the touch pad 60 is changed in the active state, and when the user touches the touch pad 60 once more, the function of the touch pad 60 is performed.

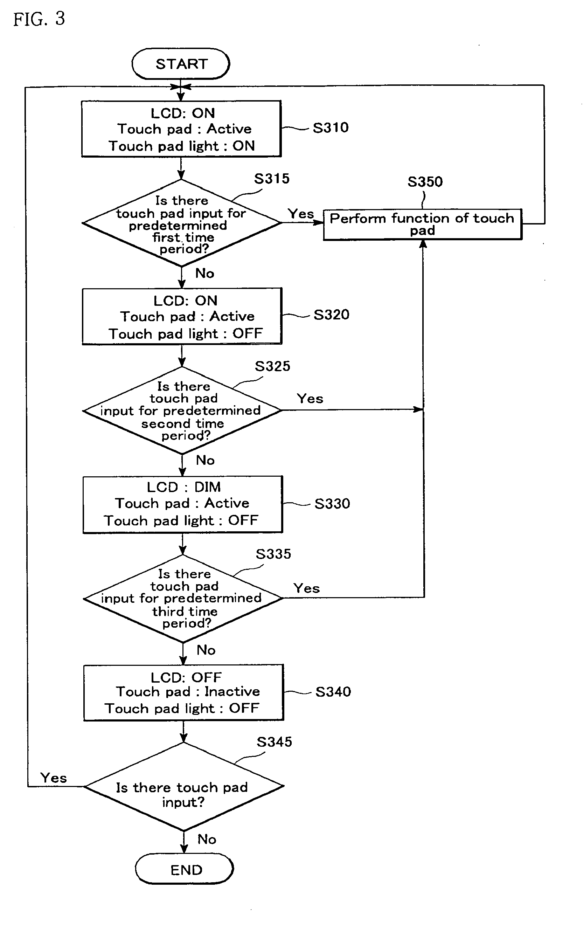

Next, FIG. 3 is a flowchart illustrating a method of controlling a touch pad in a mobile communication terminal according to another embodiment of the present invention. FIG. 3 is similar to FIG. 2, but in FIG. 3, a four-step control procedure is performed. FIG. 1 will also be referred to in this description.

As shown in FIG. 3, the LCD of the display unit 50 is turned ON, the light of the touch pad unit 60 is turned ON and the touch pad included in the touch pad unit 60 is in an active state (S310). This is similar to step S210 in FIG. 2. As discussed above, the active state of the touch pad means that the user can select or active a function on the touch pad by touching the appropriate position of the touch pad.

The controller 20 then determines if the user has touched the touch pad within a first predetermined time period (S315), and when the controller 20 determines the user has touched the touch pad (e.g., to input information (Yes in S315), the controller 20 performs the function corresponding the touched touch pad (S350).

Further, when the controller 20 determines the user has not touched the touch pad within the first predetermined time period (No in S315), the controller 20 turns the touch pad light OFF, but maintains the LCD in the display unit 50 in the ON state and maintains the touch pad of the touch pad unit 60 in an active state (S230). Thus, the LCD of the display unit 50 remains in an ON state, the touch pad included in the touch pad unit 60 remains in the active state, and the touch pad light is changed into an OFF state. As such, it is possible to reduce power consumption by only turning off the light of the touch pad.

The controller 20 then determines if the user has touched the touch pad within a second predetermined time period (S325). When the user has not touched the touch pad (No in S325), the controller 20 reduces the brightness of the display unit 50 to a dim state, and maintains the previous states of the touch pad and touch pad light (S330).

When the controller 20 determines the user has touched the touch pad within the second predetermined time period (Yes in S325), the controller 20 performs the function corresponding the touched touch pad (S350). The controller 20 then determines if the user has touched the touch pad within a third predetermined time period (S335). When the controller 20 determines the user has touched the touch pad within the third predetermined time period (Yes in S335), the controller 20 performs the function corresponding the touched touch pad (S350).

However, when the controller 20 determines the user has not touched the touch pad within the third predetermined time period (No in S335), the controller 20 turns OFF the display unit 50, turns the touch pad unit 60 into an inactive state, and keeps the touch pad light OFF (S340).

Further, after step S340, the controller 20 determines if there is input on the touch pad (S345), and if there is input on the touch pad (Yes in S345), the process returns to step S310. That is, the touch pad light and the LCD are turned ON and the touch pad is turned into an active state.

In addition, when the light of the touch pad 60 is turned OFF in steps S320, S330 and S340, and when the touch pad is touched by the user, the controller 20 controls the touch pad back light driver 70 to turn ON the light of the touch pad. Similar to the embodiment shown in FIG. 2, when the touch pad 60 is touched by the user, the function on the touch pad is only performed when the touch pad is the active state.

In more detail, when the user touches the touch pad within the predetermined second time period (Yes in S325), and because the touch pad 60 is in an active state, the corresponding function of the touch pad 60 is performed (S350), and at the same time, the light of the touch pad 60 changes from an OFF state into an ON state and the LCD of the display unit 50 remains in an ON state.

In addition, the embodiments of the present invention also apply to an input unit that is not a touch pad such as an input unit including a regular keypad or other input buttons. Also, rather than using an LCD in the display unit 50, an OLED can be used as the display unit 50.

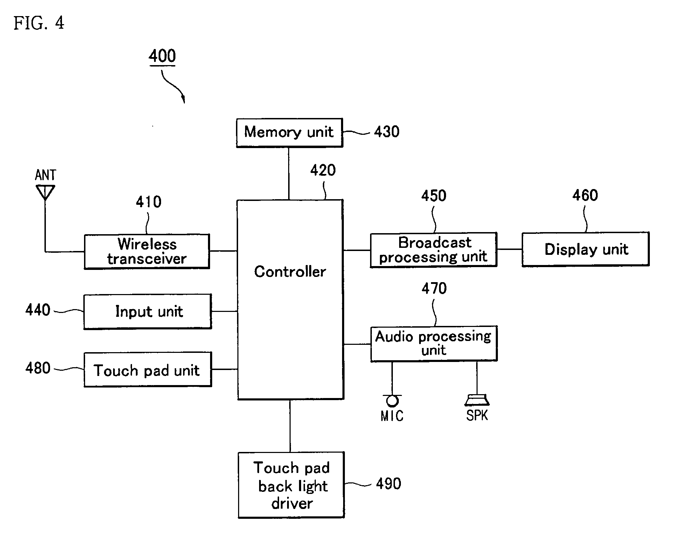

FIG. 4 is a block diagram illustrating a mobile communication terminal 400 according to another embodiment of the present invention. As shown, the mobile communication terminal 400 includes a wireless transceiver 410, a controller 420, a memory unit 430, an input unit 440, a broadcast processing unit 450, a display unit 460, an audio processing unit 470, a touch pad unit 480 and a touch pad back light driver 490.

The wireless transceiver 410 performs a communication function of the mobile communication terminal 400. The wireless transceiver 410 also receives a digital multimedia broadcast from a broadcasting station. Further, the controller 420 controls the overall operations of the mobile communication terminal 400. For example, when there is a DMB broadcast performance request from the input unit 440, the controller 420 changes a current mode of the terminal 400 into a DMB mode and displays the DMB broadcast on the display unit 460.

Further, when entering the DMB mode, the controller 420 sets the touch pad unit 480 into an inactive state, and controls the touch pad light driver 490 to turn ON a light of the touch pad unit 480. That is, the touch pad unit 480 is set into an inactive state when entering the DMB mode to prevent an erroneous operation if the user accidentally touches the touch pad unit 480.

In addition, when the touch pad unit 480 is in an inactive state upon entry into the DMB mode, and when the user touches a touch pad included with the touch pad unit 480, the controller 420 changes the touch pad unit 480 into an active state. Further, the memory unit 430 includes a program memory and a data memory. The program memory stores programs for controlling the operations of the mobile communication terminal 400, and the data memory stores user-data and other data used in operating the mobile terminal.

Further, the input unit 440 includes buttons or keys that the user selects to input numerals and character information. The input unit 440 also includes function buttons that the user can select to perform specific functions. The input unit 440 includes a key pad, a jog dial, a touch screen, a joy stick etc. In addition, the input unit 440 receives a DMB broadcast performance request from the user.

In addition, the display unit 460 displays information and menu screens used in operating the mobile terminal 400. The display unit 460 includes, for example, a liquid crystal display (LCD) or an organic light emitting diode (OLED). Further, the display unit 460 may include two or more display devices including an external display unit and an internal display unit. The display unit 460 also displays received DMB broadcasts.

Further, the touch pad unit 480 includes at least one touch pad that is used as an input device to receive input from a user. That is, the user can touch the touch pad to input or select desired characters or functions. Also, the touch pad back light driver 490 turns ON/OFF a light of the touch pad unit 480 by controlling a power supply to a back light of the touch pad unit 480. The touch pad back light driver 490 also controls the touch pad unit 480 to turn ON or OFF the entire light of the touch pad unit 480 or only specific portions of the touch pad unit 480. Further, as discussed above, the touch pad unit 480 is set in an inactive state by the controller 420 when entering the DMB mode.

In addition, the audio processing unit 470 outputs an audio signal that is decoded in the controller 420 through a speaker (SPK) or outputs an audio signal generated from a microphone (MIC) to the controller 420. Further, the broadcast processing unit 450 processes a DMB video/audio received through the wireless transceiver 410, and displays the DMB broadcast on the display unit 460.

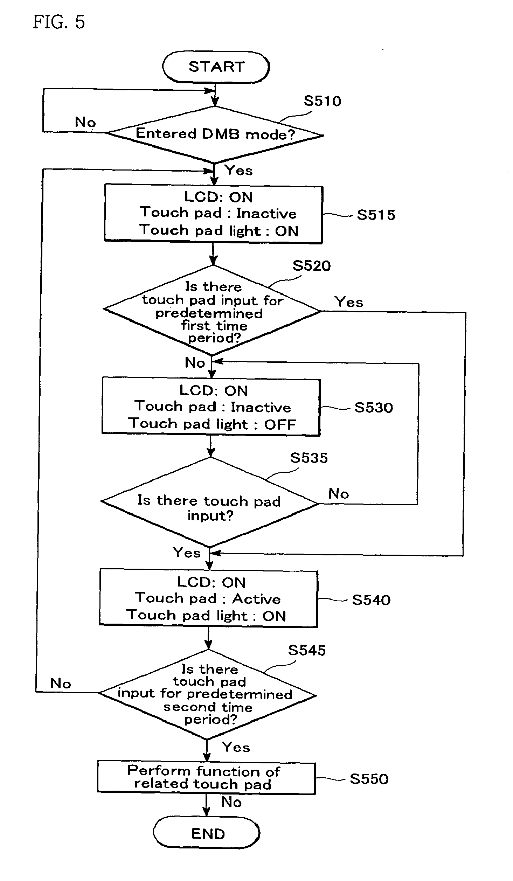

Next, FIG. 5 is a flowchart illustrating a method of controlling a touch pad in a mobile communication terminal during a DMB broadcast according to an embodiment of the present invention. In this embodiment, the LCD of the display unit 460 always remains in an ON state after entering the DMB broadcast mode. FIG. 4 will also be referred to in this description.

Referring to FIG. 5, the controller 420 determines whether or not the user has entered the DMB mode to watch a particular DMB broadcast (S510). When the controller 420 determines the user has entered the DMB mode (Yes in S510), the controller 420 displays the broadcast on the display unit 460 (i.e., the LCD of the display unit 460 is turned ON) (S515). The touch pad unit 480 is also deactivated and the touch pad light for the touch pad unit 480 is turned ON.

The controller 420 then determines if the user touches the touch pad included in the touch pad unit 480 within a first predetermined time period (S515). When the controller 420 determines the user has not touched the touch pad within the first predetermined time period (No in 5520), the controller 420 turns OFF the touch pad light, maintains the LCD of the display unit 460 in the ON state and maintains the touch pad in the inactive state (S530).

In addition, when the controller 420 determines the user has touched the touch pad of the touch pad unit 480 (Yes in S520), the functions of the touch pad are not performed, and the controller 420 changes the touch pad from an inactive state into an active state (S540). Accordingly, the user has to touch the touch pad once to active the touch pad and again to input a desired function.

That is, after step S540, the controller 420 determines if the user has touched the touch pad within a second predetermined time period (S545). When the controller 420 determines the user has touched the touch pad (Yes in S545), and the touch pad is in the active state, the controller 420 performs the corresponding function touched by the user (S550). When the controller 420 determines the user has not touched the touch pad (No in S545), the process returns to step S515 and the controller changes the touch pad into an inactive state again (S515).

Further, after step S530, the controller 420 determines if the user has touched the touch pad (S535). If the user has touched the touch pad (Yes in S535), the process performs the step S540. If the user has not touched the touch pad (No in S535), the states in step S530 are maintained.

Further, although this embodiment is described with respect to DMB as an example of a portable mobile broadcast, the present invention also applies to any portable mobile broadcast such as Media FLO or DVH-S. In addition, rather than using the LCD as a display unit, an OLED or other type of display unit may also be used.

In addition, the first, second and third predetermined time periods may be set in advance by the manufacturer of the terminal. The time periods may also be changed or set by a user of the terminal using the appropriate menu options.

As described above, according to the present invention, an active state or an inactive state of the touch pad is controlled independently of an ON/OFF state of a touch pad light, that is to say that the touch pad and the touch pad light are controlled separately. Accordingly, although the user touches the touch pad in the state that the touch pad light is turned off, when the touch pad is in an active state, a function of the touch pad can be performed.

Further, according to an embodiment of the present invention, when the touch pad light is in an OFF state, and when the user touches a touch pad, all lights of the touch pads or the lights for a specific touch pad are turned ON so that the user can better see the touch pads.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A method of controlling a mobile communication terminal (100; 400) comprising a touch pad (60; 480), a corresponding touch pad light (70; 490) and a display device (50; 460), **characterized in that** the method comprises:
independently controlling an active state or an inactive state of the touch pad, an ON state or an OFF state of the touch pad light and at least an ON state or an OFF state of the display device.

2. The method of claim 1 comprising:
first controlling (210) the display device to enter into the ON state, the touch pad light to enter into the ON state and the touch pad to enter into the active state; and
second controlling (220) the display device to enter into a dim state, the touch pad light to enter into the OFF state and the touch pad to maintain the active state when there is no input on the touch pad within a predetermined first time period after the first controlling step.

3. The method of claim 2, further comprising;
third controlling (230) the display device to enter into an OFF state, the touch pad light to maintain the OFF state and the touch pad to enter into the inactive state, when there is no input on the touch pad within a predetermined second time period after the second controlling step.

4. The method of claim 1 comprising:
first controlling (310) a display device to enter into the ON state, a touch pad light to enter into the ON state and the touch pad to enter into the active state; and
second controlling (320) the display device to maintain the ON state, the touch pad light to enter into the OFF state and the touch pad to maintain the active state when there is no input on the touch pad within a predetermined first time period after the first controlling step.

5. The method of claim 4, further comprising;
third controlling (330) the display device to enter into a DIM state, the touch pad light to maintain the OFF state and the touch pad to maintain the active state, when there is no input on the touch pad with a predetermined second time period after the second controlling step.

6. The method of claim 5, further comprising;
fourth controlling (340) the display device to enter into the OFF state, the touch pad light to maintain the OFF state and the touch pad to enter the inactive state, when there is no input on the touch pad with a predetermined third time period after the third controlling step.

7. The method of claim 1 comprising:
entering (510) a broadcast mode to display a broadcast; and
first controlling (515) the display device to be in the ON state, the touch pad light to be in the ON state and
the touch pad to be in the inactive state when the broadcast mode is entered.

8. The method of claim 7, further comprising:
second controlling (530) the display device to maintain the ON state, the touch pad light to enter into an OFF state and the touch pad to maintain the inactive state, when there is no input on the touch pad within a predetermined first time period after the broadcast mode is entered.

9. The method of any one of claims 1 to 8, further comprising:
determining (215, 225; 315, 325, 335; 545) if there is input on the touch pad when the touch pad is in the active state; and
performing (240; 350; 550) the function of the terminal indicated by said input on the touch pad, when said input on the touch pad happens when the touch pas is in the active state.

10. The method of claim 9, further comprising:
returning the display device to the ON state and the touch pad light to the ON state when there is input on the touch pad when the touch pad is in the active state.

11. The method of any one of claims 1 to 10, further comprising:
determining (235; 345; 520, 535) if there is input on the touch pad when the touch pad is in the inactive state; and
not performing the function of the terminal indicated by the input on the touch pad, controlling the display device to the ON state, returning the touch pad light to the ON state and returning the touch pad to the active state, when the determining step determines there is input on the touch pad when the touch pad is in the inactive step.

12. A mobile communication terminal (100; 400), comprising:
a display device (50; 460) configured to display information;
a touch pad device (60; 480) including at least one touch pad configured to input information into the terminal; and
a touch pad back light driver (70; 490) configured to enter a touch pad light for the at least one touch pad to be in an ON and OFF state,
**characterized in that** it further comprises a controller (20; 420) configured to independently control an active state or an inactive state of the touch pad, an ON state or an OFF state of the touch pad light and at least an ON state or an OFF state of the display device.

13. The mobile communication device of claim 12, wherein said controller is adapted to first control (210) operations of the display device to enter into the ON state, the touch pad light to enter into the ON state and the at least one touch pad to enter into the active state and to second control (220) operations of the display device to enter into a dim state, the touch pad light to enter into the OFF state and the at least one touch pad to maintain the active state, when there is no input on the touch pad within a predetermined first time period after the first control operations.

14. The mobile communication terminal of claim 13, wherein the controller is further configured to third control (230) operations of the display device to enter into an OFF state, the touch pad light to maintain the OFF state and the at least one touch pad to enter into an inactive state, when there is no input on the at least one touch pad within a predetermined second time period after the second control operations.

15. The mobile communication terminal of claim 12, wherein the controller is adapted to first control (310) operations of the display device to enter into an ON state, the touch pad light to enter into an ON state and the at least one touch pad to enter into an active state and to second control (320) operations of the display device to maintain the ON state, the touch pad light to enter into an OFF state and the at least one touch pad to maintain the active state, when there is no input on the touch pad within a predetermined first time period after the first control operations.

16. The mobile communication terminal of claim 15, wherein the controller is further configured to third control (330) operations of the display device to enter into a DIM state, the touch pad light to maintain the OFF state and the at least one touch pad to maintain the active state, when there is no input on the touch pad with a predetermined second time period after the second control operations.

17. The mobile communication terminal of claim 16, wherein the controller is further configured to fourth control (340) operations of the display device to enter into an OFF state, the touch pad light to maintain the OFF state and the at least one touch pad to enter the inactive state, when there is no input on the touch pad with a predetermined third time period after the third control operations.

18. The mobile communication terminal of claim 12, further adapted to display a received broadcast and wherein the controller is configured to enter (510) the mobile communication terminal into a broadcast mode to display the received broadcast, to first control (515) operations of the display device to be in an ON state, the touch pad light to be in an ON state and the at least one touch pad to be in an inactive state when the broadcast mode is entered.

19. The mobile communication terminal of claim 18, wherein the controller is further configured to second control (530) operations of the display device to maintain the ON state, the touch pad light to enter into an OFF state and the at least one touch pad to maintain the inactive state, when there is no input on the touch pad within a predetermined first time period after the broadcast mode is entered.

20. The mobile communication terminal of any one of claims 12 to 19, wherein the controller is further configured to determine (215, 225; 315, 325, 335; 545) if there is input on the at least one touch pad when said touch pad is in the active state, and to perform (240, 350; 550) a function of the terminal indicated by the input on the touch pad, when the controller determines said input on the at least one touch pad happens when the touch pad is in the active state.

21. The mobile communication terminal of claim 20, wherein the controller is further configured to return the display device to the ON state and the touch pad light to the ON state when there is input on the at least one touch pad when the touch pad is in the active state.

22. The mobile communication terminal of any one of claims 12 to 21, wherein the controller is further configured to determine (235; 345; 520, 535) if there is input on the at least one touch pad when the touch pad is in the inactive state, and not to perform the function of the terminal indicated by the input on the at least one touch pad, returning the display device to the ON state, and the touch pad light to the ON state, when the controller determines there is input on the at least one touch pad when the touch pad is in the inactive state.
